# EUROPEAN PATENT SPECIFICATION

(11) **EP 1 066 146 B1**
(45) Date of publication and mention of the grant of the patent: **05.01.2005**
(21) Application number: 99912577.6
(22) Date of filing: 12.03.1999
(51) Int. Cl.: B29C 44/04, B65D 81/05, B65D 81/32

(54) **FOAM IN BAG PACKAGING SYSTEM AND METHOD FOR PRODUCING THE SAME**
VERPACKUNGSSYSTEM MIT SCHAUMGEFÜLLTEN BEUTELN UND VERFAHREN ZU SEINER HERSTELLUNG
SYSTEME D'EMBALLAGE EN SACHETS PAR COULEE DE MOUSSE ET PROCEDE DE FABRICATION ASSOCIE

(30) Priority: 13.03.1998 US 77962 P
(43) Date of publication of application: 10.01.2001
(73) Proprietor: Sealed Air Corporation (US), Saddle Brook, New Jersey 07663 (US)
(72) Inventor: BERTRAM, George, Teofilius, Newtown, CT 06470 (US); ARMSTRONG, William, Richardson, Newtown, CT 06740 (US); PILLOTE, Lawrence, John, Southbury, CT 06488 (US); MAHON, William, Joseph, Southbury, CT 06488 (US); WHEELER, Robert, Don, Fairfield, CT 06430 (US); SPERRY, Laurence, Burst, Boston, MA 02135 (US)
(74) Representative: Warren, Anthony Robert
(86) International application number: PCT/US1999/005724
(87) International publication number: WO 1999/046103

(56) References cited:
- WO-A-98/46407
- BE-A- 894 727
- US-A- 3 419 134
- US-A- 5 699 902

## Description

The present invention relates to foam-in-place packaging of articles susceptible to damage during handling, shipment and storage and, in particular, relates to foam-in-bag packaging systems which will produce foam cushions upon demand.

The packaging of fragile articles or articles susceptible to damage during such packaging, shipment and storage presents many distinct problems. Foam-in-place packaging has been well known and widely used as protective packaging for such articles for a number of years. Foam-in-place technology is based upon the reaction between two (usually liquid) precursor components which, when mixed, will react to form a polymer foam and gaseous by-products. In particular, and most commonly, an isocyanate containing component is mixed with a polyol containing component and these components react to produce a urethane polymer (polyurethane), steam and carbon dioxide. Under proper conditions, the steam and carbon dioxide generated by the reaction will disburse through the polymer and form an expanded polyurethane foam that provides protective cushioning for articles being packaged. The reaction of the components, when mixed to form an expanded foam, takes a minute or two and this time frame makes it feasible to manipulate and use the foam for packaging purposes. Initially, the foam precursor components were injected into containers (e.g. corrugated boxes and either a mold element was used to form an article receiving cavity as the foam expanded, or the article wrapped in a protective material was itself placed in the container and the foam permitted to expand therearound. Such foam-in-place packaging has been very successful and is still widely used for certain packaging purposes. However, such foam-in-place packaging did not address, or was not suited for, many packaging purposes.

Accordingly, a next generation of foam-in-place packaging has been developed in which devices were provided which concurrently form plastic bags and inject into the bag the mixture of foam precursor components. This bag is provided with vents to the outside to permit the steam and carbon dioxide by-products to escape during the formation of the foam. Prior to the reaction of the components to produce foam, an operator places the newly made bag into a container in which an object has been placed and then closes the container. The precursors react to produce foam which fills the void areas within the container, while forming a custom shaped cushion around the object being packaged. Such foam-in-bag packaging technology has also been quite successful and is now in substantial use.

Examples of such foam-in-bag technology heretofore developed is shown and described in a number of our patents and including United States Patent Numbers 4,800,708; 4,854,109; 4,938,007; 5,027,583; 5,139,151 and 5,376,219.

All of these devices are characterized by forming the bags and injecting the foam precursor components into the bags immediately prior to the reaction of the components and the production of foam in the bags. Therefore, these devices by necessity must be placed adjacent the packaging operation. Here again, these devices are not adaptable or usable in all packaging situations, although they have greatly expanded the use of foam-in-place packaging technology.

Our United States Patent Number 5,699,902 discloses a still further generation of foam-in-place packaging. This patent discloses a packaging system in which a bag is formed of flexible plastic film material defining an enclosed space therein and having separate interior cells in the enclosed space. The cells contain two different foam precursor components. The two cells containing the foam precursor components are separated by a frangible seal which maintains the precursor components separate until it is desired to use the bag. Once the packaging system is to be used, the frangible seal between the two cells is broken and the two precursor components are mixed.

There is also provided another frangible seal between the cells and the enclosed space within the bag. This second frangible seal is broken by the reaction of the two precursor components and the production of foam which expands out of the cells into the enclosed space in the bag until the interior of the bag is substantially filled and a foam cushion is formed. The interior of the bag is vented to the outside so that the gaseous by-products of the foaming reaction may escape from the bag. By this arrangement, a foam-in-bag packaging system has been provided in which bags could be produced at locations remote from the packaging operations, packaged in containers, shipped to the packaging operation locations and stored until desired for use. When desired for use, an appropriately sized bag is removed from its container, the first frangible seal between the two cells is broken and the chemicals mixed, and the second frangible seal is broken by the reaction and a foam cushion is formed in the enclosed space in the bag. Accordingly, a packaging system of greatly increased versatility and usability was thus provided. However, the production of reliable frangible seals which maintain the two components separate, but which may be readily fractured to permit mixing of the components has been the cause of concern and anxiety.

With the foregoing in mind, it is an object of the present invention to provide flexible packages having a unique frangible seal which maintains precursor components separate while being readily fracturable upon desired use of the package to provide mixing of the heretofore separated components.

To this end, the invention resides in a packaging system as set forth in claim 1 hereof. In one embodiment, the packaging system comprises a bag formed of flexible plastic material which defines an interior enclosed space, which interior space is vented to the outside of the bag to permit gaseous by-products of the foaming reaction to escape. A packet or pouch having a plurality of compartments therein, separated from each other by at least one frangible seal and having another frangible seal between the compartments in the packet and the enclosed space within the bag, is provided within the bag. First and second foam precursor components are contained in the separate compartments within the packet and are maintained separated by the interior frangible seal. The packet is formed of a barrier material which is capable of maintaining the foam precursors in a substantially stable and unreacted state for the desired shelf life of the foam-in-bag packaging system.

A packaging system of this type is disclosed in our co-pending application EP-A-1 062 615.

In accordance with a first preferred embodiment, the frangible seals of this invention include a seal pattern which comprises one or more substantially continuous seal lines, each of which extend substantially between opposite sides of the packet to substantially divide the packet into a plurality of compartments. Each seal line is configured such that any imaginary straight line between the opposite sides of the packet and intersecting the seal line subtends at least, one converging pocket defined by two segments of the seal lines which converge upon each other in the opening direction. Accordingly, the converging seal line segments are at oblique angles to the first direction. Preferably, this seal line defines a plurality of converging pockets which are spaced apart and extend substantially from one side of the compartment of the packet to the other. Thus, when the compartment is compressed, it causes liquid in the compartment to advance in the second direction, the leading edge or front of the liquid intersects a given seal line and liquid enters the wide end of each of the converging pockets and flows to the narrow end thereof. Fluid forces acting outwardly on the opposing panels which are joined along the converging seal line segments accordingly cause progressive peeling apart of the barrier material in the region of each converging pocket from the wide end toward the narrow end thereof.

By way of example and not by way of limitation, seal patterns in accordance with the first preferred embodiment of the invention include grids of spaced-apart intersecting seal lines in orthogonal or non-orthogonal fashion running oblique to the first direction and extending to each of the opposite sides of the packet, such that seal lines extending from one side to the other are defined by joined segments of the grid lines. Alternatively, the seal pattern may comprise wave form seal lines, such as sawtooth or wavy lines extending from one side to the other. The converging pockets may take a variety of forms, including but not limited to triangular or V-shaped, cusp-shaped, U-shaped or other shapes.

In accordance with a second preferred embodiment of the invention, the seal pattern comprises a plurality of discrete sealed areas separated from one another by unsealed areas and arranged in a regular matrix having a density of at least about 6 matrix lines per cm (15 matrix lines per inch) and, more preferably, at least about 19.7 matrix lines per cm (50 matrix lines per inch).

The frangible seals may be formed by various techniques. In a preferred method, the opposing panels of barrier material have inner surfaces that are heat sealable to each other. One of the opposing regions of the inner surfaces that are to be joined to create the frangible seal is covered by a layer of resist material which prevents the heat sealing of the opposing surfaces to each other. The resist material is applied in a reverse image of the seal pattern. For example, to produce a square grid seal pattern, resist material is applied in a checker board pattern with the squares of resist material spaced apart such that the spaces between the squares define intersecting or orthogonal lines along which the panels of barrier material are to be joined.

The opposing panels of barrier material are overlayed with their inner surfaces confronting each other. The panels are pressed together and heat and pressure are then applied to the panels in a region of the resist material to cause heat sealing of the panels together in the areas not covered by the resist material.

The resist material may be applied by various techniques. In a preferred method, a resist material is printed onto the inner surface of one of the panels by a rotary printing press, such as a flexographic, roto-gravure or rotary letterbox press. Where the frangible seal is formed by a matrix of sealed areas, the seal advantageously is formed by printing resist material onto the inner surface of one of the panels by a half-tone printing process. The resist is applied with a half-tone dot line density of at least about 6 lines per cm (15 lines per inch) and a surface coverage of at least about 60%.

The resist material may comprise a material having an acrylic/styrene resin-based vehicle and other components, such as surfactants, alcohol, defoamers and waxes may be added to the vehicle to improve adhesion, wetting out and other properties of the resist for insuring accurate application of the resist pattern to the panel surface. A pigment may be added to the vehicle to facilitate visual inspection of the resist pattern. Also, solvent based inks, such as nitro-cellulose, polyamide type inks, may be used.

In accordance with one preferred embodiment of the invention, the inner surfaces of the panels are formed of a substantially non-polar polymer material which has not been treated by chemical modification, such as corona discharge treatment or flame treatment or by other treatments, to impair to any significant degree the strength of the non-frangible best seals. The panels are thus more readily heat sealable to each other so that sufficiently strong non-frangible seals may be achieved to form fluid-tight compartments in a packet. As set forth in claim 17 hereof, the invention also resides in a packet incorporating frangible seals. In accordance with a preferred embodiment of the invention, a packet is provided having two compartments for containing two different components, the compartments being separated by a frangible seal according to the invention. The packet also includes a second frangible seal between one of the compartments and the outside which, once the packet is placed in the bag, will comprise the interior space within the bag. Advantageously, the second frangible seal has a greater peel strength than the first frangible seal so that the second seal is not inadvertently ruptured when the user compresses one of the compartments to break the first seal, thus assuring that the two reactive fluids are brought into intimate contact within the package so that thorough mixing occurs before either fluid can escape the packet.

A further preferred embodiment of a packet for containing foam-forming precursors includes panels formed of a laminate having, from an outer layer to an inner layer thereof, an oriented polyethylene teraphthalate layer, a polyethylene tie layer, a metal foil layer, an ethylene acrylic acid layer and a non-polar polymer layer, such as low density polyethylene, linear low-density polyethylene or the like.

In order that the present invention may be more readily understood reference will now be made to the accompanying drawings, in which,
Figure 1 is a plan view of a foam-in-bag packaging system in accordance with the present invention;
Figure 2 is a fragmentary enlarged plan view of the bag shown in Figure 1 illustrating the manner of fracturing or rupturing the interior frangible seal and mixing of the foam precursor components within the packet;
Figure 3 is an enlarged fragmentary sectional view taken substantially along line 3-3 in Figure 1;
Figure 4 is a plan view of a packet in accordance with one preferred embodiment of the present invention having an inner frangible seal between two compartments and an outer frangible seal for releasing the foam precursors from the packet;
Figure 5 is a plan view of a sheet of flexible barrier material from which the packet illustrated in Figures 1-4 is formed and illustrating the inner surface having two areas of resist material applied for formation of the two frangible seals;
Figure 6 is an enlarged fragmentary view of a portion of the seal pattern for the inner frangible seal as illustrated in Figure 5;
Figure 7 is a cross-sectional view taken substantially along line 7-7 of Figure 4;
Figure 8 is an enlarged fragmentary view of a portion of the inner frangible seal shown in Figure 7;
Figure 9 is a fragmentary schematic view illustrating an alternative seal pattern for forming the frangible seals of the packet of the present invention;
Figure 10 is a fragmentary schematic view depicting another alternative seal pattern for forming the frangible seals of the packet of this invention;
Figure 11 is a fragmentary schematic view depicting yet another alternative seal pattern for forming the frangible seals;
Figure 12 is a fragmentary schematic view depicting a still further alternative seal pattern for forming the frangible seals of the packet of this invention;
Figure 13 is a fragmentary schematic view depicting a half-tone seal pattern for forming the frangible seals;
Figure 14 is a schematic view of a printing apparatus for applying a resist material to a web of barrier material for forming packets in accordance with this invention; and
Figure 15 is a fragmentary enlarged cross-sectional view taken substantially along line 15-15 in Figure 4.

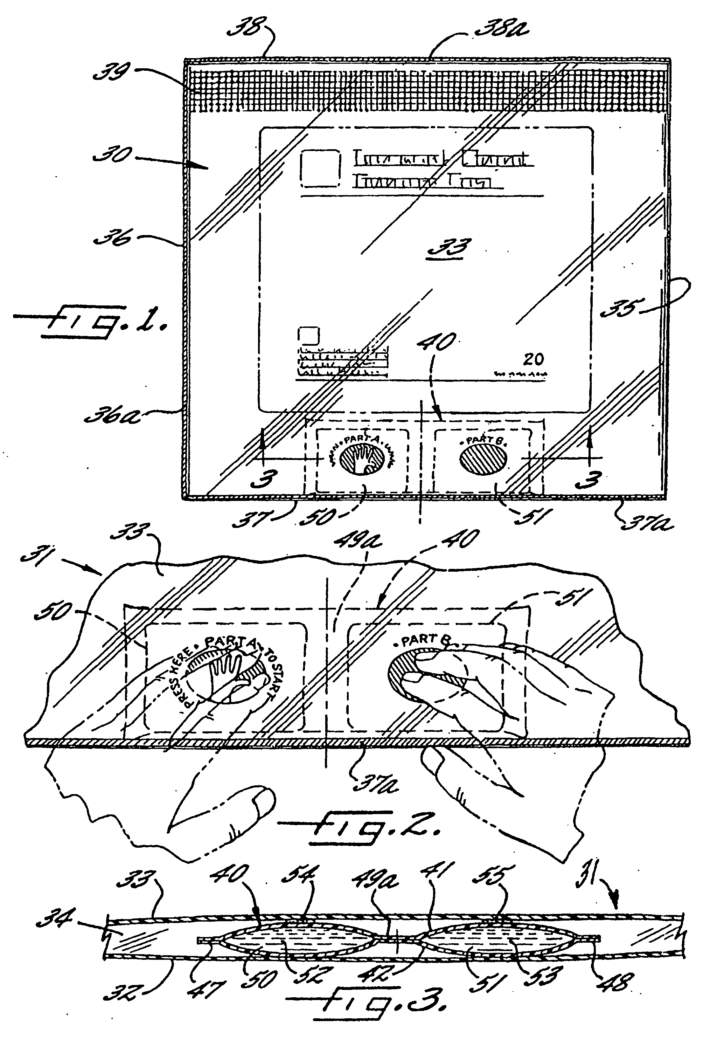

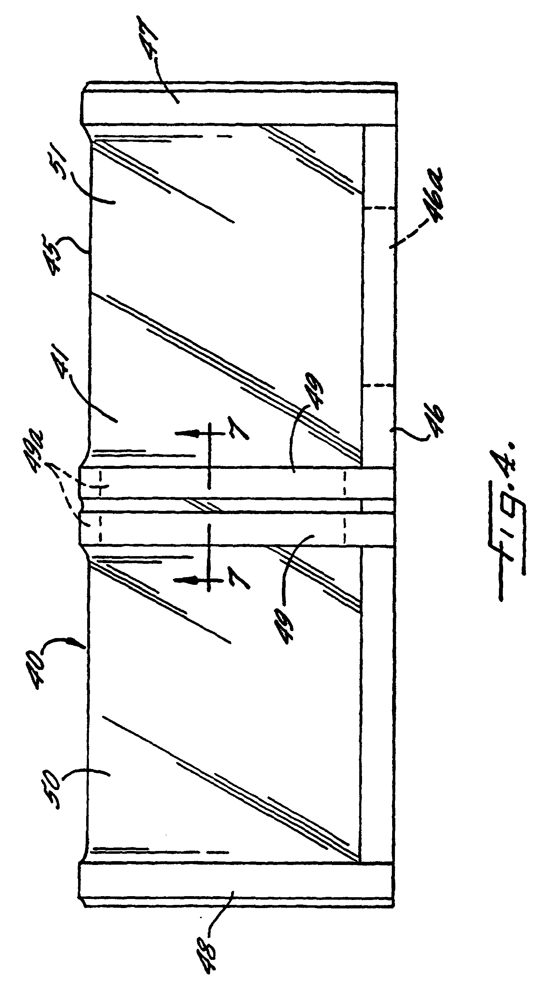

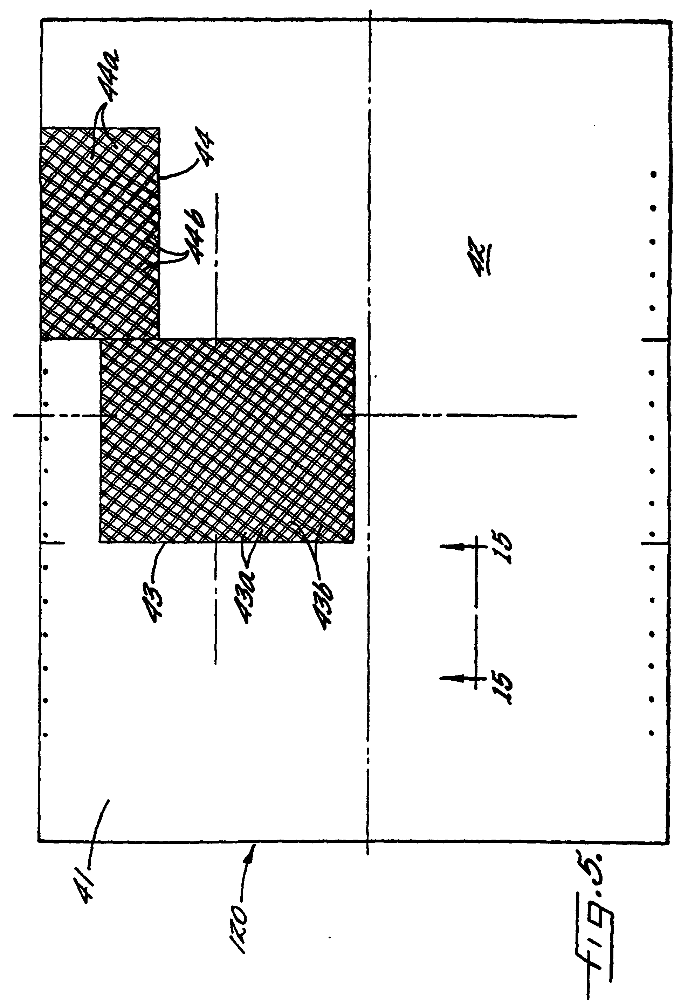

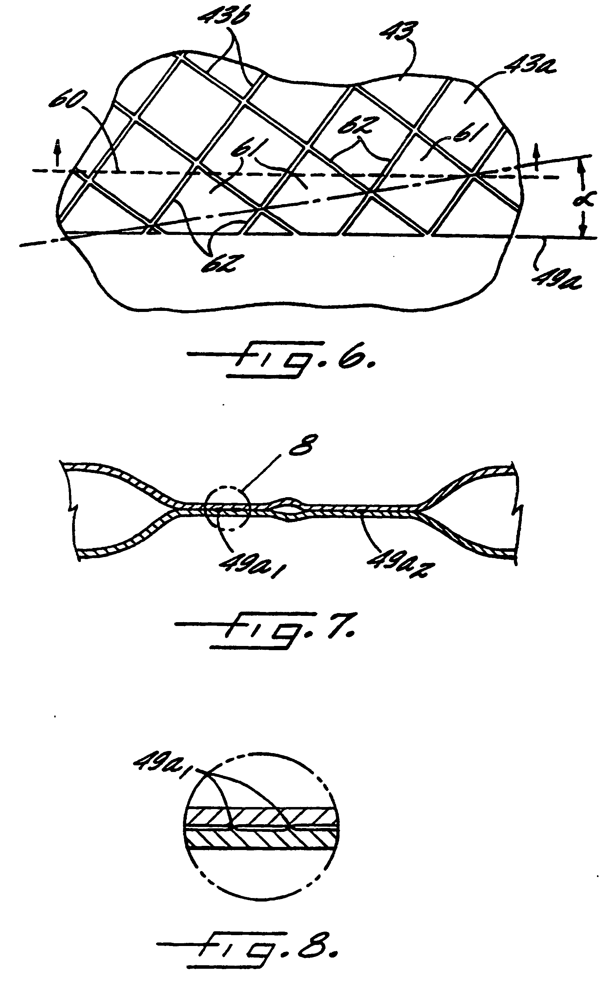

Referring now more specifically to the drawings and particularly to Figures 1-4, there is illustrated therein a foam-in-bag packaging system generally indicated at **30**, incorporating the features of the present invention. The packaging system **30** includes a bag, generally indicated at **31,** which includes a pair of superposed panels **32** and **33.** Panels **32** and **33** are formed of flexible plastic film material, such as that described in United States Patent No. 5,699,902. Panels **32** and **33** are preferably elongate and have sides **35, 36** and ends **37, 38** joined together to define an enclosed space **34** therewithin. It is to be understood that panels **32** and **33** may be formed from separate sheets of plastic film material or, as illustrated, from a single sheet or web of plastic film material folded along its longitudinal center line to form the joined side edge **35**. The other side edge **36** and the end edges **37** and **38** are joined together by heat seals **36a**, **37a** and **38a** to enclose completely the space **34** between the panels **32** and **33**. The enclosed space **34** is vented to the outside of the bag **31** by a band **39** of perforations through at least one of the panels **32** and **33**.

A packet or pouch **40** is positioned within the space **34** between the panels **32** and **33** prior to the joinder of the side and end edges **36** and **37**, **38**. Preferably, packet **40** is positioned adjacent one end of the bag **31,** but it is to be understood that the packet **40** may be located at any desired location within the enclosed space **34**. Most preferably, packet **40** is positioned at the opposite end of bag **31** from the band **39** of venting perforations and is secured in this position in a suitable manner, such as by an adhesive.

Packet **40** includes a pair of panels **41** and **42** of a barrier material capable of maintaining foam precursor compositions in a stable, unreacted state for as long as required between manufacture thereof and use of the foam-in-bag packaging system **30**. This barrier material preferably is a composite material which includes a heat sealable layer on the inside surface of the barrier material when the barrier material is formed into the packet **40** and other layers of material necessary to provide the requisite moisture imperviousness and other barrier characteristics. Such a composite material is described in United States Patent No. 5,699,902.

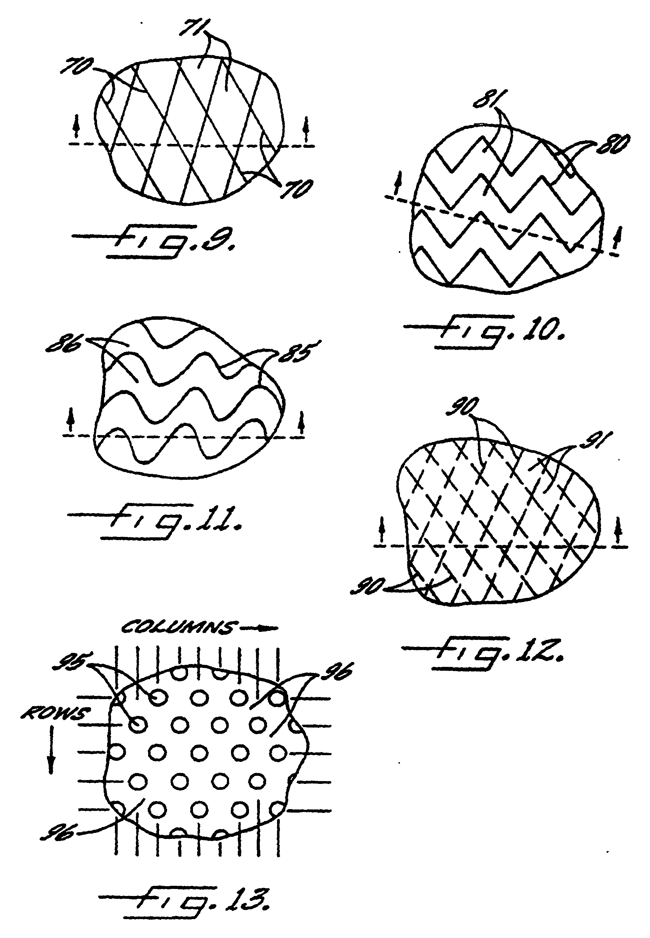

The panels **41** and **42** may be formed from separate sheets of barrier material or may be formed by a single sheet of barrier material that is folded longitudinally along the center line **45** thereof as described above. Prior to formation of the panels **41** and **42** into the packet **40,** certain areas of panel **41** are printed with a release or masking material or ink to prevent areas covered thereby from being heat sealed to panel **42.** In this embodiment, a first printed area **43** (Figure 5) extends transversely of the width of panel **41** from a point near the longitudinal fold line **45** toward the outer side edge thereof, a predetermined distance less than the full width of panel **41.** A second printed area **44** extends longitudinally of panel **41** from a point spaced from the right end (Figure 5) toward the left end, a predetermined distance which may extend to the printed area **43.** The printed areas **43** and **44** comprise discontinuous printed patterns with spaced apart printed areas **43a** and **44a** leaving unprinted areas **43b** and **44b** therebetween. Since printed areas **43a** and **44a** serve as masking for the underlying heat sealable layer and prevent the panels **41** and **42** from being heat sealed together wherever a printed area **43a** or **44a** occurs, only unprinted areas **43b** and **44b** may be heat sealed to panel **42,** thereby forming frangible seals.

It is important that the second printed area **44** of the resist pattern extend completely to the side edge of the panel **41** of barrier material, as any region of the panel not covered by the printed pattern **44** along that edge tends to form a seal along the edge that is difficult to rupture. Accordingly, it is advantageous to form the panel **41** slightly wider than its finished size and to extend the resist pattern **44** into a marginal edge region which is subsequently cut off along a cut line that goes through the resist pattern **44,** thus assuring that there is no strip of uncovered sheet material at the edge in the region of the resist pattern **44.**

The resist material printed on printed areas **43** and **44** may be of a material having an acrylic/styrene resin-based vehicle and other components, such as, surfactants, alcohols, defoamers and waxes which may be added to the vehicle to improve adhesion, wetting out and other properties of the resist for ensuring accurate application of the resist patterns to the innersurface of panel **41**. A pigment may be added to the vehicle to facilitate visual inspection of the resist pattern. Also, solvent based inks, such as nitro-cellulose and polyamide type inks, may be used. The resist material is also referred to herein as an ink, although the invention is not limited to ink for the resist material.

The resist material may be applied by various techniques. In a preferred method in accordance with the invention, the resist material is printed onto the inner surface of the panel **41** in a rotary printing press, such as a flexographic, roto-gravure or rotary letterbox press. For example, Figure 14 schematically depicts a printing apparatus **100** for printing resist onto a roll of material for forming the panels **41** and **42.** The apparatus **100** includes an ink fountain **101,** a fountain roll **102** which picks up ink from the ink fountain **101**, an engraved transfer roll **103** (also known as an Anilox roll) which transfers ink from the fountain roll to a plate cylinder **104.** The plate cylinder **104** has a flexible plate **105** wrapped thereabout, the plate **105** having raised areas **106** to which ink is adhered. The web of sheet material is passed through the nip defined between the plate cylinder **104** and an impression cylinder **108** which applies pressure to the web to permit transfer of ink from the raised areas onto the surface of the web.

Formation of the packet **40** may be performed on a packaging machine which manipulates the elongated printed web **120** by c-folding the web and heat sealing the web to form the permanent and frangible seals. However, the invention is not limited to any particular technique for forming the packet **40** and those skilled in the art will readily comprehend other suitable techniques for forming packets **40** in accordance with the present invention.

The panels **41** and **42** are folded along the longitudinal center line of the sheet of barrier material to position panels **41** and **42** in juxtaposed relation. The side and end edges of the panels **41** and **42** are joined to provide an enclosed space between panels **41** and **42**. One side edge is joined by the fold **45**. The opposite side edges of panels **41** and **42** are heat sealed together by a heat seal **46** and the ends are similarly heat sealed together by heat seals **47** and **48**. A heat seal **49** extends transversely across the panels **41** and **42** intermediate the printed area **43** such that heat seal **49** includes a frangible seal **49a** within the printed area **43**. Seal **49** divides the enclosed space between panels **41** and **42** into first and second compartments **50** and **51**. Compartment **50** is filled with a first foam precursor component **52** and compartment **51** is filled with a second foam precursor component **53**. Preferably, the first foam precursor component **52** is an isocyanate containing component and the second foam precursor component **53** is a polyal containing component. The heat seal **46** extends along the length of printed area **44** and, in that area, provides a second frangible seal **46a** between the second compartment **51** and the enclosed space **34** in bag **31**. To ensure that the frangible seals **49a** and **46a** are sufficiently frangible, that the same can be broken as needed and break evenly and smoothly, it is preferred that the transverse frangible seal **49a** should have a peel strength of about 0.09 to about 0.63 kg per cm (0.5 to about 3.5 pounds per inch) and that frangible seal **46a** have a peel strength of 1.07 - 1.25 kg per cm (6-7 pounds per inch) or less. The peel strength is determined by a peel test performed on an Instron machine. This peel test essentially comprises pulling apart two sealed sheets in opposite directions at 90° to the plane of the peeled sheets and measuring the force required to peel the sheets apart per inch (2,54 cm) of sheet width measured along the line along which the sheets separate. By way of comparison, the heat seals **46, 47, 48** and **49** in areas other than the printed areas **43** and **44** have a peel strength of about 2.14 to about 3.57 km per cm (12 to about 20 pounds per inch).

A peel strength of the level preferred for the frangible seal **49a** is suitable for allowing rupturing of the inner frangible seal **49a** when relatively moderate compression is applied to either of the compartments **50** or **51**. Upon rupture of the frangible seal **49a**, the foam precursor components in the compartments **50** and **51** can mix since the rupture of the frangible seal **49a** transforms the separate compartments into a single joined compartment. Thorough mixing of the two precursor components may be accomplished by kneading the packet **40** in alternation to cause a back and forth flow of the combined components within the packet, as is illustrated in Figure 2.

The outer frangible seal **46a** is for dispensing or releasing the mixed components from the packet **40** into the enclosed space **34** of bag **31** upon the commencement of a foaming reaction. The outer seal **46a** has a peel strength which is greater than that of the inner frangible seal **49a**, but less than that of the permanent seals along the edges and ends of the packet **40**. Thus, the compression of the components in one of the compartments to rupture the inner frangible seal **49a** does not rupture the outer frangible seal **46a** so that the components are confined within the packet **40** until foaming reaction commences.

The inner and outer frangible seals **49a** and **46a** may be formed in any suitable manner which provides the desired degree of peel strength. However, it has been found particularly advantageous to construct these frangible seals in the manner to be described below so as to ensure that uniform seals strengths are obtained, and repeatable and controlled rupturings of the seal are achieved.

To these ends, a frangible seal in accordance with this invention is formed by sealing together the opposed panels **41** and **42** of the packet **40** with a seal pattern which leaves a majority of the panels' surface areas unsealed in the region of the frangible seals **49a** or **46a**, and wherein the sealed areas define a pattern having certain characteristics.

The seal pattern may be formed by various techniques. For example, where the patterns are heat sealable to each other, the seal pattern may be produced by configuring the heat sealing dyes or jaws with the desired pattern. However, it has been found advantageous to form the frangible seal pattern by applying the resist material to the inner heat sealable surface of one of the opposing panels, which are to be joined to form the seal. The resist material is applied in a reverse or negative image of the desired seal pattern. The resist material prevents heat sealing of the panels **41** and **42** and, accordingly, the desired seal pattern is obtained by applying pressure and heat to the panels in a region of the resist material, which causes the panels to be sealed together wherever resist material is absent.

The resist patterns **43** and **44** are configured, in the embodiment of the invention depicted in Figure 5, as squares **43a** and **44a** arranged in a checkerboard fashion, such that the regions of the panel **41** not covered by the resist material, form an orthogonal grid of intersecting lines **43b** and **44b**. It will be appreciated that the resultant seal pattern formed by heat sealing the opposing panels **41** and **42** along the region of the resist pattern **43** will comprise seal lines forming an orthogonal grid of intersecting lines substantially identical to the lines **43b**. Thus, the resist pattern **43** is a reverse or negative image of the desired sealed pattern and, accordingly, the lines **43b** are referred to herein as seal lines.

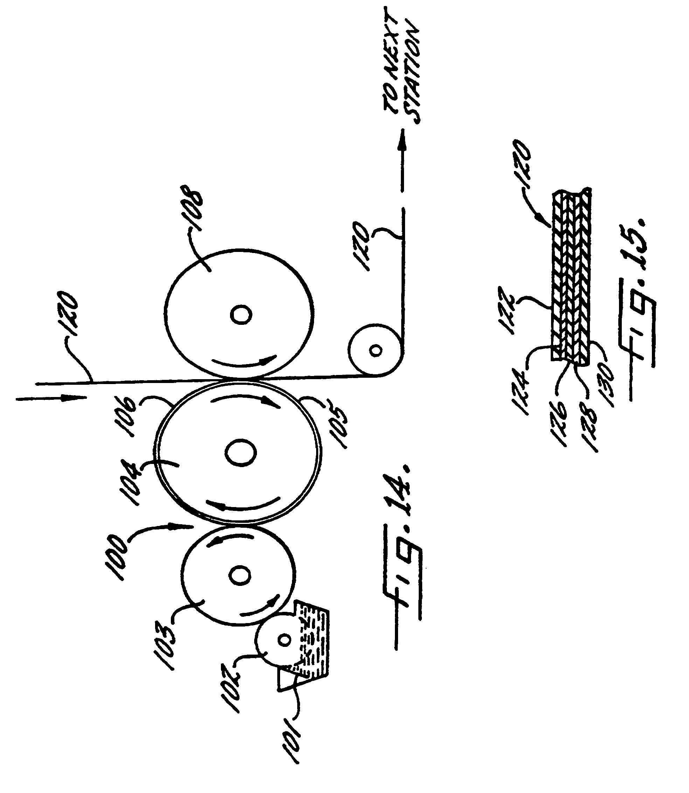

The seal pattern is configured to facilitate a uniform and controlled peeling apart of the opposing panels **41** and **42** of the packet **40** when one of the compartments **50** or **51** is compressed to cause rupturing of the inner frangible seal **49a.** This is achieved by arranging the seal pattern such that a linear front of fluid, represented by the line **60** in Figure 6, which is advancing from compartment **51** toward compartment **50** along a direction generally perpendicular to the inner frangible seal **49a** and encounters at least one converging pocket **61** (Figure 6) defined by a segment of seal lines **43b** which are at oblique angles to the advancing fluid front along the line **60.** Preferably, there are a plurality of converging pockets **61** spaced apart along the seal line between the opposite ends of the frangible seal **49a**, as is shown in Figure 6. The converging pockets **61** facilitate peeling apart of the opposing panels **41** and **42** of the packet **40** by fluid pressure acting within the pockets **61**, which causes the panels **41** and **42** to be peeled apart along the directions of the oblique converging seal lines of the pockets **61,** such as seal lines **62** (Figure 6).

The seal lines **43b** advantageously have a width of about 0.051 mm (0.002 inch) to about 0.254 mm (0.01 inch) and, more preferably, about 0.051 mm (0.002 inch) to about 0.152 mm (.006 inch). The grid patterns **43** and **44** may be tailored to achieve desired seal strength. For instance, to facilitate making the outer frangible seal **46a** stronger than the inner frangible seal **49a,** the seal lines in the inner resist pattern **43** preferably are 0.076 mm (0.003 inch) wide and the seal lines **44b** in the outer pattern **44** are 0.102 mm to 0.127 mm (0.004 to 0.005 inch) wide. Further, the grid in the inner resist pattern **43** may have a different grid size or spacing between seal lines than that of the outer resist pattern **44.** The inner and outer resist patterns **43** and **44** advantageously have a grid spacing of about 2.03 mm to about 2.79 mm (0.08 inch to about 0.11 inch).

It has been found that if the points of intersection of the orthogonal seal lines **43b** and **44b** are aligned along the direction of the fluid front, rupturing of the frangible seal **49a** and **46a** is not uniform and tends to occur in a irregular or jerky fashion as the aligned inner section points all tend to become unsealed at about the same moment, and this repeats for each row of aligned intersection points. It has further been discovered that this non-uniform or irregular opening is alleviated appreciably by orienting the grid such that the intersection points define an oblique line at an angle a with respect to the fluid front direction represented by line **60**. The angle α is preferably about 5° to about 9° and more preferably about 7°.

As is illustrated in Figures 7 and 8, the inner frangible seal **49a** of the packet **40** preferably comprises two discreet seals **49a**_{**1**} and **49a**_{**2**} separated by an unsealed region therebetween. This facilitates forming the packet **40** on a packaging machine in which two heat sealing bars are used alternately to form the two seals **49a**_{**1**} and **49a**_{**2**} of two contiguous packets, following which completed packets are separated from the advancing web of sheet material by cutting along a cut line between the transverse edge seal **48** of one packet and seal **47** of the contiguous packet. However, the space between seals **49a**_{**1**} and **49a**_{**2**} has the further advantage of permitting a packaging line operator to determine whether any of the package components are being deposited on the inner surface of the panels **41** and **42** in the region of the inner frangible seal **49a**, which can impair proper sealing of the panels to each other. This is accomplished by cutting a completed package along the unsealed region between the two frangible seals **49a**_{**1**} and **49a**_{**2**} to check for fluid present therein.

As can be seen in Figure 8, the opposing panels **41** and **42** are sealed to each other only in the regions which do not have resist material applied to panel **41**. Thus, fluid can flow through the spaces between the sealed regions in order to fill the converging pockets **61** as previously described.

Figures 9 through 12 show various alternative seal patterns in accordance with the present invention. In these figures, the patterns are not shown in reverse or negative image, but rather the lines represent the seal lines between the opposing panels **41** and **42** of the packet **40**. The seal pattern need not be an orthogonal grid as shown in Figures 5 and 6, and various non-orthogonal grids may be used, such as the one shown in Figure 6 in which intersecting continuous lines **70** form a diamond-shaped grid with converging pockets **71**.

Furthermore, the seal pattern need not be an intersecting or grid pattern. For example, Figures 10 and 11 depict two alternative seal patterns in which continuous lines **80** and **85** extend throughout the frangible seals **49a** and **46a.** As shown in Figure 10, the seal pattern is a running W or saw tooth pattern and, as depicted in Figure 11, the seal pattern is a wavy or sine-wave type pattern. The lines **80** define converging pockets **81** and the lines **85** define converging pockets **86.**

The seal lines forming the seal pattern need not be completely continuous throughout the frangible seals **49a** and **46a.** For example, Figure 12 depicts a diamond grid pattern made up of lines **90** which have discontinuities or gaps **91** therein. The gaps **91** are sufficiently narrow such that the fluid is prevented from migrating through the seal.

The seal pattern need not be composed of lines or line segments. For example, Figure 13 depicts a seal pattern in which discreet sealed regions **95** are spaced apart and surrounded by unsealed areas 96 and are arranged in a matrix configuration. The matrix is shown as having a substantially regular or uniform spacing of the matrix rows and columns but non-uniform matrixes may be used if desired; for example, for providing relatively weaker and stronger regions of a given seal.

Where the seal pattern of Figure 13 is accomplished by applying resist material to the panel **41** or **42** in a reverse image of the pattern of Figure 13, as described above, the resist material advantageously is applied by a half-tone printing process. Half tones are conventionally described in terms of half-tone density in lines per inch, each line representing a row or column of the matrix and in terms of percent coverage of the material being applied to the sheet. The frangible seals **49a** and **46a** may be formed advantageously by printing resist material in a half-tone matrix having a line density of at least about 5.9 lines per cm (15 lines per inch) and, more preferably, at least about 19.7 lines per cm (50 lines per inch), with a coverage of at least about 60 percent and, more preferably, at least about 80 percent

As stated earlier, where foam precursor components are to be contained in packet **40,** it has been found preferable to use a laminant sheet, as generally indicated at **120** in Figure **15**. The laminant sheet **120** is formed of five layers. A layer **122** which forms the exterior surface of the packet **40** is formed of an oriented polyethyleneteraphthalate (PET), such as MYLAR. A polyethylene tie layer **124** is joined to the PET layer **122,** and a metal foil layer **126** is joined to the tie layer **124.** A layer **128** of ethylene acrylic acid is joined to the inner side of the foil layer **126**, and a linear low density polyethylene (LLDPE) layer **130** is joined to the layer **128** and forms the inner surface of the packet **40.**

The inner layer **130** may also be formed of low density polyethylene (LDPE), other types of polyethylene, and other non-polar polymer materials, or other heat sealable materials. In printing inks onto non-polymer materials, it is conventional to treat the surface by way of corona discharge or flame treatment in order to modify chemically the surface to increase the surface energy (measured in dynes) so that the inks adhere more readily to the surface. However, in accordance with the present invention, the resist material is applied to the inner surface of non-polar polymer material which is in a substantially virgin state, i.e., substantially unmodified by any corona discharge, flame or other treatment. It has been found that such modifying treatments impair the heat-sealability of the surface, leading to lower-strength permanent seals. Accordingly, the entire inner surfaces of the sheet or sheets forming the packet **40** comprise substantially virgin non-polar polymer material.

## Claims

1. A packaging system (30) for producing a foam-in-bag cushion upon demand, comprising
a bag (31) formed of flexible plastic film material (32,33) and defining therein an enclosed space (34) of a volume corresponding to the size of the foam cushion to be produced, said enclosed space being vented (39) to the outside of said bag to permit the escape of gases generated during the formation of the foam cushion while preventing the escape of foam therefrom,
a foam precursor packet (40) positioned at a predetermined location within said enclosed space (34) in said bag and being formed of a barrier material capable of maintaining foam precursor components in a relatively stable and unreacted state, said packet including first and second compartments (50,51) respectively containing first and second foam precursor components (52,53), a first frangible seal (49a) separating said first and second compartments, and a second frangible seal (46a) between said packet and said enclosed space (34) in said bag,
said frangible seals (49a,46a) being adapted to be ruptured when it is desired to form the foam-in-bag cushion to enable the precursor components (52,53) to react and produce foam which expands into said enclosed space (34) in said bag until said enclosed space is substantially filled with foam and said cushion is formed, **characterised in that**
said frangible seals (49a,46a) have a peel strength of at least about 0.09 kg per cm (about 0.5 pound per inch) and less than about 2.14 kg per cm (about 12 pounds per inch), and said first frangible seal (49a) has a peel strength less than the peel strength of said second frangible seal (46a), whereby said first and second precursor components (52,53) mix upon rupture of said first frangible seal to react to produce foam which will rupture said second frangible seal and expand from said packet into said enclosed space (34) in the bag.

2. A packaging system according to claim 1, wherein said first frangible seal (49a) has a peel strength within the range of about 0.09 to about 0.63 kg per cm (about 0.5 to about 3.5 pounds per inch).

3. A packaging system according to claim 1 or 2, wherein said second frangible seal (46a) has a peel strength of about 0.71 to about 1 .25 kg per cm (about 4 to 7 pounds per inch).

4. A packaging system according to claim 1, 2 or 3, including means for securing said packet (40) in said bag (31) at said predetermined location.

5. A packaging system according to any preceding claim, wherein said frangible seals (49a,46a)are each formed by a band (43,44) of printing extending along one of the contiguous surfaces of said packet (40), said band of printing comprising a pattern of spaced apart printed areas (43a,44a) separated by a grid of spaced apart seal lines (43b-44b,62,70,80,85,90)in orthogonal or non-orthogonal fashion throughout the length of said frangible seals.

6. A packaging system according to claim 5, wherein said grid of spaced apart seal lines is disposed such that the seal lines run at an oblique angle to a line (60) perpendicular to the side edges of said packet (40).

7. A packaging system according to claim 5 or 6, wherein said grid of spaced seal lines is arranged in a regular matrix having a density of at least about 2.4 matrix lines per cm (6 matrix lines per inch) and preferably at least about 19.7 matrix lines per cm (50 matrix lines per inch).

8. A packaging system according to claim 5, 6 or 7, wherein said grid of spaced apart seal lines define a plurality of converging pockets (61,71,81,86,91) having a wide end facing the compartments (50,51) and a narrow end at said frangible seals (49c,46a), whereby said precursor components (51,52) enter said pockets through said wide ends and flow toward the narrow ends thereof, causing progressive peeling apart of the panels (41,42) in the region of each of said converging pockets.

9. A packaging system according to claim 8, wherein said converging pockets (61,71,81,86.91) are triangular in shape, V-shaped, cusp-shaped or U-shaped.

10. A packaging system according to any preceding claim 5 to 9, wherein said grid of spaced apart seal lines includes seal lines (62,70) intersecting substantially at right angles or at other angles to form a diamond shaped grid.

11. A packaging system according to any preceding claim 5 to 10, wherein said band of printing comprises a pattern of spaced apart printed areas separated by unprinted areas defining a grid pattern in which the lines (80,85) of unprinted surface areas do not intersect but have overlapping portions which would be intersected by a straight line drawn across the grid.

12. A packaging system according to claim 11, wherein said grid pattern defines a saw tooth or sine-wave pattern (80,85).

13. A packaging system according to any preceding claim 5 to 12, wherein said band of printing comprises a pattern of printed areas with unprinted areas, and wherein said printed areas cover at least about 60 percent of the surface area of said band of printing and, preferably, at least about 80 percent of said band of printing.

14. A packaging system according to claim 13, wherein said unprinted areas comprise half-tone dots (95).

15. A packaging system according to any preceding claim, wherein said first frangible seal (49a) comprises a pair of spaced apart seals (49a₁, 49a₂) separated by an unsealed region of the band of printing.

16. A packaging system according to any preceding claim, wherein said second frangible seal (46a) comprises a pair of spaced apart seals separated by an unsealed region.

17. A packet (40) for use in a foam-in-bag packaging system, comprising first and second juxtaposed panels (41,42) formed of a barrier material capable of maintaining foam precursor components in a relatively stable and unreacted state, said panels being joined around the periphery thereof to define an enclosed space therebetween,
a first frangible seal (49a) extending across said panels and dividing said enclosed space into first and second compartments (50,51) separated by said first frangible seal,
a first precursor component (52) in said first compartment,
a second precursor components (53) in said second compartment, and
a second frangible seal (46a) between the enclosed space and the exterior of said packet, **characterised in that**
said first frangible seal (49a) has a peel strength of between about 0.18 kg per cm (1 pound per inch) and 1.08 kg per cm (6 pounds per inch), and said second frangible seal (46a) has a peel strength greater than said first frangible seal and less than a non-frangible heat seal (46,47,48) joining the panels about the periphery thereof.

## Patentansprüche

1. Verpackungssystem (30) zur Herstellung eines Schaum-im-Beutel-Polsters nach Bedarf, das
einen Beutel (31), der aus einem flexiblen Kunststofffolienmaterial (32,33) gebildet ist und darin einen umschlossenen Raum (34) mit einem Volumen entsprechend der Größe des zu erzeugenden Schaumpolsters definiert, wobei der umschlossene Raum zur Außenseite des Beutels entlüftet wird (39), um das Entweichen von Gasen zu gestatten, die während der Bildung des Schaumpolsters erzeugt werden, während gleichzeitig das Entweichen von Schaum hieraus verhindert wird, und
ein Schaumvorläuferpaket (40) umfaßt, das an einer vorbestimmten Position in dem umschlossenen Raum (34) in dem Beutel angeordnet ist und aus einem Barrierematerial gebildet ist, das die Schaumvorläuferkomponenten in einem verhältnismäßig stabilen und nicht umgesetzten Zustand halten kann, wobei das Paket erste und zweite Kammern (50,51), die jeweils erste und zweite Schaumvorläuferkomponenten (52,53) enthalten, eine erste zerbrechliche Siegelung (49a), die die ersten und zweiten Kammern trennt, und eine zweite zerbrechliche Siegelung (46a) zwischen dem Paket und dem umschlossenen Raum (34) in dem Beutel aufweist,
wobei die zerbrechlichen Siegelungen (49a,46a) so angepaßt sind, daß sie aufbrechen, wenn die Ausbildung des Schaum-im-Beutel-Polsters gewünscht wird, damit die Vorläuferkomponenten (52,53) reagieren und Schaum produzieren können, der sich in den umschlossenen Raum (34) in dem Beutel ausdehnt, bis der umschlossene Raum im wesentlichen mit Schaum ausgefüllt und das Polster gebildet ist, **dadurch gekennzeichnet, daß**
die zerbrechlichen Siegelungen (49a,46a) eine Schälfestigkeit von mindestens etwa 0,09 kg/cm (etwa 0,5 lb/Zoll) und weniger als etwa 2,14 kg/cm (etwa 12 lb/Zoll) besitzen und die erste zerbrechliche Siegelung (49a) eine geringere Schälfestigkeit als die zweite zerbrechliche Siegelung (46a) aufweist, wobei die ersten und zweiten Vorläuferkomponenten (52,53) sich bei dem Aufbrechen der ersten zerbrechlichen Siegelung mischen, um unter Produktion von Schaum zu reagieren, der die zweite zerbrechliche Siegelung zerreißt und sich aus dem Paket in den umschlossenen Raum (34) in dem Beutel ausdehnt.

2. Verpackungssystem nach Anspruch 1, bei dem die erste zerbrechliche Siegelung (49a) eine Schälfestigkeit im Bereich von etwa 0,09 bis etwa 0,63 kg/cm (etwa 0,5 bis etwa 3,5 lb/Zoll) besitzt.

3. Verpackungssystem nach Anspruch 1 oder 2, bei dem die zweite zerbrechliche Siegelung (46a) eine Schälfestigkeit von etwa 0,71 bis etwa 1,25 kg/cm (etwa 4 bis 7 lb/Zoll) besitzt.

4. Verpackungssystem nach Anspruch 1, 2 oder 3, das Mittel zur Befestigung des Pakets (40) in dem Beutel (31) an der vorbestimmten Position aufweist.

5. Verpackungssystem nach einem der vorangehenden Ansprüche, bei dem die zerbrechlichen Siegelungen (49a,46a) jeweils durch einen Bedruckungsstreifen (43,44) gebildet werden, der sich entlang einer der benachbarten Oberflächen des Pakets (40) erstreckt, wobei der Bedruckungsstreifen ein Muster aus beabstandeten bedruckten Bereichen (43a, 44a) umfaßt, die durch ein Netz von beabstandeten Siegellinien (43b-44b,62,70,80,85,90) in rechtwinkliger oder nicht rechtwinkliger Weise über die Länge der zerbrechlichen Siegelungen getrennt sind.

6. Verpackungssystem nach Anspruch 5, bei dem das Netz aus beabstandeten Siegellinien so angeordnet ist, daß die Siegellinien in einem schiefen Winkel zu einer Linie (60) senkrecht zu den seitlichen Rändern des Pakets (40) verlaufen.

7. Verpackungssystem nach Anspruch 5 oder 6, bei dem das Netz aus beabstandeten Siegellinien in einer regelmäßigen Matrix mit einer Dichte von mindestens etwa 2,4 Matrixlinien je Zentimeter (6 Matrixlinien/Zoll) und vorzugsweise mindestens etwa 19,7 Matrixlinien je Zentimeter (50 Matrixlinien/Zoll) angeordnet ist.

8. Verpackungssystem nach Anspruch 5, 6 oder 7, bei dem das Netz aus beabstandeten Siegellinien eine Vielzahl von konvergierenden Taschen (61,71,81,86,91) mit einem weiten, auf die Kammern (50,51) ausgerichteten Ende und einem engen Ende bei den zerbrechlichen Siegelungen (49c,46a) definiert, wobei die Vorläuferkomponenten (51,52) in die Taschen durch die weiten Enden eintreten und zu den engen Enden fließen, was eine fortschreitende Ablösung der Wände (41,42) in dem Bereich jeder der konvergierenden Taschen bewirkt.

9. Verpackungssystem nach Anspruch 8, bei dem die konvergierenden Taschen (61,71,81,86,91) dreieckig, V-förmig, spitz zulaufend oder U-förmig sind.

10. Verpackungssystem nach einem der vorangehenden Ansprüche 5 bis 9, bei dem das Netz aus beabstandeten Siegellinien Siegellinien (62,70) einschließt, die sich im wesentlichen unter Ausbildung eines diamantförmigen Netzes rechtwinklig oder in anderen Winkeln kreuzen.

11. Verpackungssystem nach einem der vorangehenden Ansprüche 5 bis 10, bei dem der Bedruckungsstreifen ein Muster aus beabstandeten bedruckten Bereichen umfaßt, die durch unbedruckte Bereiche getrennt sind, die ein Netzmuster definieren, bei dem sich die Linien (80,85) von unbedruckten Oberflächenbereichen nicht kreuzen, aber überlappende Anteile besitzen, die von einer geraden, über das Netz gezogenen Linie gekreuzt würden.

12. Verpackungssystem nach Anspruch 11, bei dem das Netzmuster ein Sägezahn- oder Sinuswellenmuster (80,85) definiert.

13. Verpackungssystem nach einem der vorangehenden Ansprüche 5 bis 12, bei dem der Bedruckungsstreifen ein Muster aus bedruckten Bereichen mit unbedruckten Bereichen umfaßt und bei dem die bedruckten Bereiche mindestens etwa 60% der Oberfläche des Bedruckungsstreifens und vorzugsweise mindestens etwa 80% des Bedruckungsstreifens umfassen.

14. Verpackungssystem nach Anspruch 13, bei dem die unbedruckten Bereiche Halbtonpunkte (95) umfassen.

15. Verpackungssystem nach einem der vorangehenden Ansprüche, bei dem die erste zerbrechliche Siegelung (49a) ein paar von beabstandeten Siegelungen (49a₁,49a₂) umfaßt, die durch einen ungesiegelten Bereich des Bedruckungsstreifens getrennt sind.

16. Verpackungssystem nach einem der vorangehenden Ansprüche, bei dem die zweite zerbrechliche Siegelung (46a) ein paar von beabstandeten Siegelungen umfaßt, die durch einen ungesiegelten Bereich getrennt sind.

17. Ein Paket (40) zur Verwendung in einem Schaum-im-Beutel-Verpackungssystem, das
erste und zweite angrenzende Wände (41,42) aus einem Barrierematerial, das Schaumvorläuferkomponenten in einem verhältnismäßig stabilen und nicht umgesetzten Zustand halten kann, wobei die Wände an ihren Rändern verbunden sind, um einen umschlossenen Raum dazwischen zu definieren,
eine erste zerbrechliche Siegelung (49a), die sich über die Wände erstreckt und den umschlossenen Raum in erste und zweite Kammern (50,51) getrennt durch die erste zerbrechliche Siegelung unterteilt,
eine erste Vorläuferkomponente (52) in der ersten Kammer,
eine zweite Vorläuferkomponente (53) in der zweiten Kammer und
eine zweite zerbrechliche Siegelung (46a) zwischen dem umschlossenen Raum und dem Äußeren des Pakets umfaßt, **dadurch gekennzeichnet, daß**
die erste zerbrechliche Siegelung (49a) eine Schälfestigkeit von etwa 0,18 kg/cm (1 lb/Zoll) und 1,08 kg/cm (6 lb/Zoll) und die zweite zerbrechliche Siegelung (46a) eine größere Schälfestigkeit als die erste zerbrechliche Siegelung und eine geringere Schälfestigkeit als die nicht zerbrechliche Heißsiegelung (46,47,48) aufweist, die die Wände an deren Rändern verbindet.

## Revendications

1. Système d'emballage (30) pour produire un coussin en mousse en sachet à la demande, comprenant
un sachet (31) réalisé en un matériau de film plastique flexible (32, 33) et définissant à l'intérieur un espace fermé (34) d'un volume correspondant à la dimension du coussin en mousse à produire, ledit espace fermé étant aéré (39) vers l'extérieur dudit sachet pour permettre l'échappement des gaz produits pendant la formation du coussin en mousse tout en empêchant la sortie de la mousse de celui-ci,
un paquet de précurseur de mousse (40) positionné à un emplacement prédéterminé dans ledit espace fermé (34) dans ledit sachet et constitué d'un matériau formant barrière apte à maintenir les composants de précurseur de mousse dans un état relativement stable et non réagi, ledit paquet comportant des premier et second compartiments (50, 51) contenant respectivement des premier et second composants de précurseur de mousse (52, 53), un premier joint cassant (49a) séparant lesdits premier et second compartiments, et un second joint cassant (46a) entre ledit paquet et ledit espace fermé (34) dans ledit sachet,
lesdits joints cassants (49a, 46a) pouvant être cassés lorsqu'on cherche à former le coussin en mousse en sachet pour permettre aux composants de précurseur (52, 53) de réagir et de produire une mousse qui s'expanse dans ledit espace fermé (34) dans ledit sachet jusqu'à ce que ledit espace fermé soit sensiblement rempli de mousse et que ledit coussin soit formé, **caractérisé en ce que**
lesdits joints cassants (49a, 46a) ont une force d'adhérence d'au moins environ 0,09 kg par cm (environ 0,5 livre par pouce) et inférieure à environ 2,14 kg par cm (environ 12 livres par pouce), et ledit premier joint cassant (49a) a une force d'adhérence inférieure à la force d'adhérence dudit second joint cassant (46a) par quoi lesdits premier et second composants de précurseur (52, 53) se mélangent à la suite de la rupture dudit premier joint cassant afin de réagir, pour produire une mousse qui provoquera la rupture dudit second joint cassant et qui s'expanse dudit paquet dans ledit espace fermé (34) dans le sachet.

2. Système d'emballage selon la revendication 1, où ledit premier joint cassant (49a) possède une force d'adhérence dans la plage d'environ 0,09 à environ 0,63 kg par cm (environ 0,5 à 3,5 livres par pouce).

3. Système d'emballage selon la revendication 1 ou 2, où ledit second joint cassant (46a) possède une force d'adhérence d'environ 0,71 à environ 1,25 kg par cm (environ 4 à 7 livres par pouce).

4. Système d'emballage selon la revendication 1, 2 ou 3, comportant un moyen pour fixer ledit paquet (40) dans ledit sachet (31) audit emplacement prédéterminé.

5. Système d'emballage selon l'une des revendications précédentes, où lesdits joints cassants (49a, 46a) sont chacun formés par une bande (43, 44) d'impression s'étendant le long d'une des surfaces contiguës dudit paquet (40), ladite bande d'impression comprenant un motif de zones imprimées espacées (43a, 44a) séparées par une grille de lignes de scellement espacées (43b-44b, 62, 70, 80, 85, 90) de manière orthogonale ou non orthogonale sur toute la longueur desdits joints cassants.

6. Système d'emballage selon la revendication 5, où ladite grille de lignes de scellement espacées est disposée de façon que les lignes de scellement s'étendent selon un angle oblique à une ligne (60) perpendiculaire aux bords latéraux dudit paquet (40).

7. Système d'emballage selon la revendication 5 ou 6, où ladite grille de lignes de scellement espacées est agencée selon une matrice régulière présentant une densité d'au moins environ 2,4 lignes de matrice par cm (6 lignes de matrice par pouce) et de préférence d'au moins environ 19,7 lignes de matrice par cm (50 lignes de matrice par pouce).

8. Système d'emballage selon la revendication 5, 6 ou 7, où ladite grille de lignes de scellement espacées définit une pluralité de poches convergentes (61, 71, 81, 86, 91) présentant une extrémité large orientée vers les compartiments (50, 51) et une extrémité étroite auxdits joints cassants (49a; 46a), par quoi lesdits composants de précurseur (51, 52) entrent dans lesdites poches à travers lesdites extrémités larges et s'écoulent vers les extrémités étroites de celles-ci en provoquant un décollement progressif des panneaux (41, 42) dans la région de chacune desdites poches convergentes.

9. Système d'emballage selon la revendication 8, où lesdites poches convergentes (61, 71, 81, 86, 91) sont d'une forme triangulaire, d'une forme en V, d'une forme cuspidée ou d'une forme en U.

10. Système d'emballage selon l'une des revendications précédentes 5 à 9, où ladite grille de lignes de scellement espacées comprend des lignes de scellement (62, 70) se croisant sensiblement à angle droit ou selon d'autres angles pour former une grille en losange.

11. Système d'emballage selon l'une des revendications précédentes 5 à 10, où ladite bande d'impression comporte un motif de zones imprimées espacées séparées par des zones non imprimées définissant un motif de grille dans lequel les lignes (80, 85) de zones surfaciques non imprimées ne se croisent pas mais présentent des portions de chevauchement qui seraient croisées par une ligne droite tirée sur la grille.

12. Système d'emballage selon la revendication 11, où ledit motif de grille définit un motif en dents de scie ou en ondes sinusoïdales (80, 85).

13. Système d'emballage selon l'une des revendications précédentes 5 à 12, où ladite bande d'impression comprend un motif de zones imprimées avec des zones non imprimées, et où lesdites zones imprimées couvrent au moins environ 60% de la zone de surface de ladite bande d'impression et, de préférence, au moins environ 80% de ladite bande d'impression.

14. Système d'emballage selon la revendication 13, où lesdites zones non imprimées comprennent des points en demi-ton (95).

15. Système d'emballage selon l'une des revendications précédentes, où ledit premier joint cassant (49a) comprend une paire de joints espacés (49a₁, 49a₂) séparés par une région non scellée de la bande d'impression.

16. Système d'emballage selon l'une des revendications précédentes, où ledit second joint cassant (46a) comprend une paire de joints espacés séparés par une région non scellée.

17. Paquet (40) pour utilisation dans un système d'emballage de mousse en sachet, comprenant
des premier et second panneaux juxtaposés (41, 42) réalisés en un matériau formant barrière apte à maintenir des composants précurseur de mousse dans un état relativement stable et non réagi, lesdits panneaux étant reliés autour de leur périphérie pour définir un espace fermé entre ceux-ci;
un premier joint cassant (49a) s'étendant sur lesdits panneaux et divisant ledit espace fermé en des premier et second compartiments (50, 51) séparés par ledit premier joint cassant,
un premier composant de précurseur (52) dans ledit premier compartiment,
un second composant de précurseur (53) dans ledit second compartiment et
un second joint cassant (46a) entre l'espace fermé et l'extérieur dudit paquet, **caractérisé en ce que**
ledit premier joint cassant (49a) possède une force d'adhérence comprise entre environ 0,18 kg par cm (1 livre par pouce) et 1,08 kg par cm (6 livres par pouce), et ledit second joint cassant (46a) possède une force d'adhérence plus grande que le premier joint cassant et plus petite qu'une thermosoudure non cassante (46, 47, 48) reliant les panneaux autour de leur périphérie.
